# EUROPÄISCHE PATENTSCHRIFT

(11) **EP 2 777 947 B1**
(45) Veröffentlichungstag und Bekanntmachung des Hinweises auf die Patenterteilung: **19.04.2017**
(21) Anmeldenummer: 14158119.9
(22) Anmeldetag: 06.03.2014
(51) Int. Cl.: B60B 33/00, D06F 57/08

(54) **Rollvorrichtung zum Ansetzen an ein Standgestell eines Wäschetrockners und Wäschetrockner**
Rolling device for mounting on a stand of a clothes dryer and clothes dryer
Dispositif à roulettes destiné à être mis en place sur le châssis d'un sèche-linge et sèche-linge

(30) Priorität: 11.03.2013 DE 202013101053 U
(43) Veröffentlichungstag der Anmeldung: 17.09.2014
(73) Patentinhaber: Leifheit AG, 56377 Nassau (DE)
(72) Erfinder: Fischer, Klaus-Jürgen, 56379 Holzappel (DE); Pakusa, Norbert, 56377 Schweighausen (DE); Luxa, Janine, 56075 Koblenz (DE); Meheust, Rebecca, 56072 Koblenz (DE)
(74) Vertreter: Bungartz, Klaus Peter

(56) Entgegenhaltungen:
- FR-A- 1 267 199
- US-A- 4 424 604
- US-A1- 2010 011 537

## Beschreibung

Die Erfindung betrifft eine Rollvorrichtung nach dem Oberbegriff des Anspruchs 1. Ferner betrifft die Erfindung einen Wäschetrockner mit einer solchen Rollvorrichtung.

Wäschetrockner der hier betroffenen Art weisen eine obere Trocknungsebene auf, die zum Beispiel von mehreren, parallel zueinander verlaufenden Wäscheleinen gebildet sein kann. Diese Trocknungsebene wird üblicherweise durch einen Rahmen definiert, der über ein Standgestell auf dem Boden oder einen sonstigen Untergrund abgestellt werden kann. In der Regel wird der Benutzer dabei wünschen, dass das Standgestell sicher und fest steht, um zum einen ungestört von einer ungewollten Bewegung des Wäschetrockners die Wäsche aufhängen zu können und zum anderen um zu vermeiden, dass zum Beispiel beim Trocknen im Freien durch Wind oder auch durch eine schiefe Aufstellebene der Wäschetrockner ungewollt bewegt wird.

Das Standgestell kann unterschiedliche Formen annehmen. Eine mögliche Form ist das so genannte Scherengestell, bei dem zwei mit der oberen Trocknungsebene verbundene Füße einander kreuzend X-förmig zum Boden verlaufen, wobei sie dort üblicherweise über zwei horizontale Querträger aufgestellt sind. Eine andere Ausgestaltung des Standgestells weist zwei U-förmige Bügel auf, die meist klappbar an den Enden der Trocknungsebene vorgesehen sind und sich mit dem geschlossenen Bereich nach unten in Richtung der Aufstellebene erstrecken. Auch diese Bügel weisen horizontale, bodennahe Querprofile auf, die zusätzliche, in der Regel aus Kunststoff gefertigte Gleiter oder Aufstellelemente aufweisen können.

Eine weitere bevorzugte Ausgestaltung der Wäschetrockner verwendet mehrteilige Bügel, die an den unteren Ecken jeweils über Eckverbindungselemente, die üblicherweise aus Kunststoff gefertigt sind, miteinander verbunden sind.

Beispielhaft für die oben beschriebenen Standgestelle sind zum Beispiel das aus der EP 2 527 516 A1 bekannte Standgestell. In diesem Dokument sind die genannten Grundformen des Standgestells in den einzelnen Figuren wiedergegeben, allerdings ist die Anwendung der vorliegenden Erfindung nicht auf diese Form der Wäschetrockner beschränkt, auch so genannte Turmtrockner mit mehreren, übereinander oder auch nebeneinander angeordneten Ebenen können in Verbindung mit der vorliegenden Erfindung verwendet werden.

Eine gattungsgemäße Rollvorrichtung für Wäschetrockner ist aus der US 2010/011537 A1 bekannt. Hier werden starre Rollen über vertikale und horizontale Führungen an den unteren Rand des Standgestells über nut-/Federverbindungen angeklemmt. Sie hat den Nachteil, dass die Rolle das so rollbare Standgestell schlecht rangierbar ist. Gleiches gilt für die aus der US 4 424 605 A bekannten Laufrollen eines Gartentisches.

Auch aus der DE 20 2010 015 677 U1 ist eine Rollvorrichtung für Wäschetrockner bekannt. Diese bekannte Rollvorrichtung ist nach der Art einer Walze ausgebildet, die zweigeteilt ist und um die untere, bodennahe und horizontal verlaufende Stange des Standgestells unter Belassung eines Spiels montiertwerden kann. Diese Walze dient dann als Rollhilfe, so dass der Wäschetrockner einseitig auf der gegenüberliegenden Seite derart angehoben werden kann, dass er nur noch über die Walze Kontakt zum Boden hat. Da diese Walze drehbar an der horizontalen Stange gehalten ist, kann der Wäschetrockner nun rollend verfahren werden.

Der Nachteil dieser bekannten Rollhilfe besteht jedoch darin, dass zum einen der Montageaufwand relativ groß ist und zum anderen auf der einen Seite die Walze immer aktiv ist, so dass die Standfestigkeit des Trockners auf die gegenüberliegende Seite eingeschränkt ist. Zum anderen muss der Trockner aufgrund der zusätzlichen Walze leicht schräg stehen. Ein weiterer Nachteil besteht darin, dass die Walze nicht lenkbar ist und aufgrund ihrer relativ hohen Spurtreue eine Kurvenfahrt kaum ermöglicht, so dass es zum Beispiel schwer ist, den so rollfähig gemachten Wäschetrockner in eine Ecke oder eine enge Nische zu rangieren.

Aus der FR 1 267 199 A ist ein Wäschetrockner mit am Standgestell fest montierten Laufrollen bekannt. Diese müssen aberin werkseitig vorgesehene Aufnahmen eingesetzt werden, so dass eine Nachrüstung oder ein Abnehmen der Laufrollen nicht möglich ist.

Aufgabe der Erfindung ist es daher, eine möglichst nachträglich an bestehende Wäschetrockner ansetzbare Rollhilfe zu schaffen, die ein leichtes Handling des rollbaren Wäschetrockners bei gleichzeitigen sicherem Stand und kostengünstiger Herstellung ermöglicht.

Diese Aufgabe wird nach der Erfindung durch eine Rollvorrichtung nach Anspruch 1 gelöst.

Im einfachsten Fall kann der Trägerkörper ein Zusatzelement sein, das an das Standgestell des Wäschetrockners angesetzt und dort befestigt wird. Die Laufrolle ist um die Rollachse drehbar gelagert oder es kann alternativ auch eine eingefasste und über die Fassung am Trägerkörper befestigte Kugel als Rollmittel verwendet werden.

Eine bevorzugte Ausgestaltung verwendet einen Trägerkörper, an dem das als Laufrolle ausgebildete Rollmittel eine zur Rollachse in einem Winkel angeordnete Drehachse zusätzlich drehbar gelagert ist.

Besonders günstig bei allen Ausgestaltungen ist, dass der Trägerkörper an das Standgestell nachträglich ansetzbar ist. Hierzu kann dieser Trägerkörper aus Kunststoff gefertigt sein und zum Beispiel an den Ecken der unteren Ränder des Standgestells angesetzt werden. Der Trägerkörper weist dabei einen Ausleger auf, an dem eine Laufrolle angeordnet ist und der dann die Lagerung der Laufrolle beinhaltet, die um eine horizontale Achse drehbar am Ausleger gehalten ist. Natürlich können auch mehrere Laufrollen an einem Ausleger vorgesehen sein, alternativ können auch mehrere Ausleger an einem Trägerkörper angeordnet sein.

Der Trägerkörper ist bevorzugt werkzeuglos mit dem Standgestell verbindbar. Damit der Wäschetrockner auch nach Befestigung des Trägerkörpers ausreichend sicher stehen kann, wird der Trägerkörper bevorzugt im Bereich der äußeren Ecken vorgesehen. Weiter bevorzugt ist der Trägerkörper so ausgebildet, dass er mit einem Befestigungsabschnitt an das Standgestell angesetzt werden kann, wobei dieser Befestigungsabschnitt bevorzugt an die Form des Standgestells im Bereich des Ansatzbereiches angepasst ist.

Besteht zum Beispiel das Standgestell aus einem gebogenen Metallbügel mit rohrförmigem Querschnitt, kann der Trägerkörper einen Ansatzbereich aufweisen, der rinnenartig mit einem im Querschnitt U-förmigen Bereich ausgebildet ist, so dass in diese Rinne der Metallbügel eingelegt werden kann. Bevorzugt untergreift dabei der Trägerkörper das Standgestell, so dass die Gewichtskraft des Wäschetrockners auf einem unterhalb des Standgestells positionierten Bereich des Trägerkörpers lastet.

Ein seitliches Verrutschen des Trägerkörpers kann effektiv dadurch verhindert werden, dass der Trägerkörper auch einen vertikalen Abschnitt des Standgestells aufnimmt, im oben genannten Beispiel zum Beispiel die Rinne analog zum Rohr des Standgestells gebogen ist, so dass die Ecke des gebogenen Rohrs in diese entsprechend gebogene Rinne einlegbar ist. Bevorzugt ist dann an beiden Ecken dieses Standgestells jeweils eine Rollvorrichtung vorgesehen.

Der Trägerkörper wird bevorzugt über eine elastische Rastkraft mit dem Standgestell verbunden. Im Falle der oben genannten, rinnenartigen Ausbildung des Ansatzbereichs kann dies dadurch geschehen, dass zum Einlegen der Stangen des Standgestells dieser Ansatzbereich zunächst geringfügig aufgebogen werden muss, um nach dem Einlegen wieder federnd zurückzuschnappen. Natürlich sind auch alle anderen Formen einer Rastverbindung möglich, sofern gewünscht kann es auch möglich sein, den Trägerkörper über Klettbänder oder auch Schraubverbindungen oder sonstige Verbindungsmittel mit dem Standgestell zu verbinden.

Besonders bevorzugt ist es, wenn die Laufrolle derart an den Trägerkörper angeordnet ist, dass zwei Betriebszustände möglich werden. In einer Trocknungsposition hat dann die Laufrolle keinen Kontakt mit dem Untergrund. Dies bedeutet, dass der Wäschetrockner dann entweder auf dem Standgestell oder dem unterhalb des Standgestells angeordneten Auflagebereich des Trägerkörpers sicher und fest steht und damit gegen Wegrollen gesichert ist. In einer Verfahrposition dagegen soll der Wäschetrockner beweglich sein.

Um in der Verfahrposition den notwendigen Kontakt der den Boden berührenden Lauffläche der Laufrolle herzustellen, wird der Wäschetrockner an der den Trägerkörper gegenüberliegenden Seite etwas angehoben. Damit nun die Lauffläche durch diese Kippbewegung Kontakt zum Boden bekommen kann, ist diese über den herauskragenden Ausleger vor der Kontaktfläche mit dem Boden in der Trocknungsposition angeordnet. Dies bedeutet, dass der Ausleger bei Kippen des Wäschetrockners um die Berührungslinie während der Trocknungsposition nach unten geschwenkt wird, so dass sich die Laufrolle auf dem Boden absenkt, anschließend nach einem Kontakt dann auf dem Boden abstützt, so dass ein weiteres Kippen dann ein Anheben des vollständigen Standgestells bewirkt.

Damit die oben genannte Funktion realisierbar ist, muss die Laufrolle versetzt zum Auflagebereich des Standgestells mit dem Boden angeordnet sein. Ferner muss sie nach außen versetzt sein, so dass das Anheben des gegenüberliegenden Endes des Standgestells dazu führt, dass die ursprünglich oberhalb der Ebene des Untergrundes angeordnete Laufrolle abgesenkt wird und sich auf dem Boden abstützen kann.

Bevorzugt ist die Laufrolle drehbar an dem Ausleger angeordnet. Bei einer besonders bevorzugten Ausgestaltung ist dabei die Laufrolle um 360° drehbar. Dies ermöglicht ein besonders einfaches Rangieren des Wäschetrockners, da er dann in alle Richtungen leicht verfahren werden kann.

Eine weitere bevorzugte Ausgestaltung der Erfindung weist eine Höhenverstellbarkeit der Laufrolle auf. Dies ermöglicht es dem Benutzer mit einem Bausatz zum Anbauen der Laufrollen entweder die oben beschriebene Doppelfunktion mit festem Stehen in der Trocknungsposition und Verfahrbarkeit nach dem einseitigen Anheben zu realisieren oder, sofern er dies nicht wünscht und einen dauerhaften Kontakt der Laufrolle mit dem Boden bevorzugt, die Laufrolle nach unten zu verstellen, so dass die Unterseite der Laufrolle die tiefste Stelle der Rollvorrichtung bildet und somit immer im Kontakt mit dem Boden steht. In diesem Fall kann er dann auch an allen Ecken des Standgestells eine Rollhilfe vorsehen.

Weiterhin ist bevorzugt, dass die Laufrolle drehbar am Ausleger gelagert ist, wobei die Drehachse relativ zur vertikalen Achse um einen Winkel nach vorne oder hinten vergibt ist, um je nach Wunsch einen Vor-oder Nachlauf zu realisieren. Wie der allen anderen Fahrzeugen kann dies das Fahrverhalten des beweglichen Wäschetrockners stabilisieren und ungewollte Bewegungen in seitliche Richtung verhindern.

Eine weitere mögliche Ausgestaltung der Erfindung realisiert eine Umschaltung zwischen der Doppelfunktion mit fester Standfläche im nicht gekippten Zustand und Rollkontakt nach einseitigem Kippen einerseits und einer dauerhaften Rollfunktion andererseits dadurch, dass der Trägerkörper entweder verschiebbar am Standgestell gehalten ist oder, sofern der Rollenkörper nach vorne oder hinten überragt, kippbar am Standgestell befestigt werden kann.

Um den letztgenannten Fall zu realisieren kann zum Beispiel die nach oben verlaufende Stange des Standgestells den Trägerkörper durchsetzen, wobei dieser an einer unteren Stelle kippbar gehalten sein kann und sich mit zwei gegenüberliegenden, halbzylindrischen Schalen, die V-förmig auseinander laufen, nach oben erstreckt. Die Öffnung der beiden Halbzylinder ist dann einander zugewandt und die Stange des Standgestells zwischen diesen beiden Elementen angeordnet.

Der Benutzer kann nun diesen Trägerkörper kippen und jeweils die Stange des Standgestells in eine der beiden Halbzylinder rastend einpressen, so dass der Trägerkörper in den beiden Winkelstellungen jeweils am Standgestell festlegbar ist. Ist nun der Ausleger an diesen Trägerkörper befestigt, wird er zusammen mit dem Trägerkörper verschwenkt, so dass die vertikale Position der an dem Ausleger angeordneten Laufrolle durch das Verschwenken veränderbar ist.

Sofern das Standgestell aus einzelnen, linearen Stangen besteht, die über Eckverbindungselemente miteinander verbunden sind, kann der Trägerkörper auch an diese Eckverbindungselemente angesetzt werden.

Der Trägerkörper und auch die sonstigen Teile der Rollvorrichtung sind bevorzugt aus Kunststoff gefertigt. An der Unterseite des Trägerkörpers kann der Auflagebereich, über den der Wäschetrockner mit dem Boden in Kontakt kommt, mit einer zusätzlichen, rutschhemmenden Schicht versehen sein.

Weitere Merkmale und Vorteile der Erfindung ergeben sich aus den Unteransprüchen und aus der nachfolgenden Beschreibung zweier bevorzugter Ausführungsbeispiele anhand der Zeichnungen.

In den Zeichnungen zeigt:
- Figur 1: eine erste bevorzugte Ausgestaltung einer erfindungsgemäßen Rollvorrichtung und in
- Figur 2: schematisch eine zweite Ausgestaltung einer erfindungsgemäßen Rollvorrichtung.

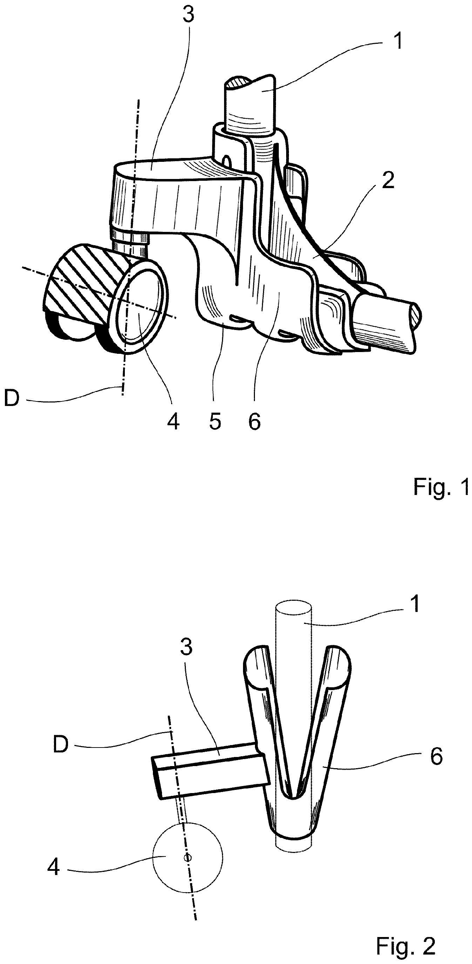

Figur 1 zeigt eine erste Ausgestaltung einer erfindungsgemäßen Rollvorrichtung. Diese Rollvorrichtung wird im Bereich eines Eckverbindungselementes 2 eines Standgestells 1 eines Wäschetrockners an diesen Wäschetrockner angesetzt.

Der Wäschetrockner weist dabei ein hier nur in Form von zwei Stangen dargestelltes Standgestell 1 auf, wobei diese Stangen über das Eckverbindungselement 2 miteinander derart verbunden sind, dass eine untere Stange horizontal zum Untergrund, insbesondere zum Boden, verläuft, während eine seitliche Stange nach oben zur Trocknungsebene des Wäschetrockners verläuft, in der die Haltemittel für die Wäschestücke angeordnet sind. Hier dargestellt ist nur eine der beiden Ecken des Standgestells 1, auf der gegenüberliegenden Seite ist ein zweites Eckverbindungselement 2 vorgesehen. Auf diese Weise ergibt sich ein im Wesentlichen U-förmiger Standfuß.

Besonderer Vorteil der Erfindung ist es nun, dass an einen herkömmlichen Wäschetrockner über den Trägerkörper 6 Laufrollen 4 angebracht werden können. Dies kann entweder im Wege der Nachrüstung oder bereits ab Werk erfolgen, wobei bei einer werksseitigen Ausrüstung die Konstruktion des Wäschetrockners nicht geändert werden muss.

Der Trägerkörper 6 besteht im Wesentlichen aus einem mittleren Bauteil, das das Eckverbindungselement 2 an seiner Ecke umgreift. Hierzu hat dieses mittlere Bauteil die Grundform einer gebogenen Rinne. In diese gebogene Rinne kann das Eckverbindungselement 2, wie aus Figur 1 ersichtlich, eingesetzt werden. An den Trägerkörper 6 ist ein Ausleger 3 vorgesehen, an dessen Endbereich wiederum die Laufrolle 4 angeordnet ist.

Der Ausleger 3 ist im Vergleich zum unteren Bereich des Trägerkörpers 6 etwas nach oben versetzt und ragt nach vorne von dem Eckverbindungselement 2 weg. Dies bedeutet, dass sich hier das Standgestell 1 und der Wäschetrockner von den gezeigten Eckverbindungselement 2 in die Papierebene hinein erstrecken. Der Ausleger 3 ist also jeweils dem gegenüberliegenden Fuß des Standgestells 1 abgewandt.

Die Laufrolle 4 ist um die Drehachse D drehbar an dem Ausleger 3 gelagert. Im gezeigten Ausführungsbeispiel kann sich die Laufrolle 4 um 360° drehen. Der Trägerkörper 6 ist so ausgebildet, dass bei auf dem Standgestell 1 stehendem Wäschetrockner die Laufrolle 4 im Vergleich zu einem unteren Auflagebereich 5 des Trägerkörpers 6 hoch gesetzt ist. Dies bedeutet, dass bei stehendem Wäschetrockner die Laufrolle 4 frei in der Luft schwebt. Ihre Funktion als Rollvorrichtung erhält sie erst nach einem Verkippen des Standgestells 1 um das horizontale Rohr des Standgestells 1, das in Figur 1 im rechten Bereich dargestellt ist.

Durch die Anordnung der Laufrolle 4 an den nach vorne hervorragenden Ausleger 3 und das nach oben Versetzen dieser Laufrolle 4 wird nun eine Doppelfunktion geschaffen. Während einerseits dann, wenn das Standgestell 1 auf den beiden gegenüberliegenden Fußbereichen aufsteht, die Laufrollen 4 inaktiv sind, kann andererseits nach einem seitlichen Anheben des hier nicht dargestellten Fußes des Standgestells 1 die Laufrolle 4 Kontakt mit dem Boden erhalten, wobei bei weiterem Anheben der gegenüberliegenden Seite dann der Auflagebereich 5 und die horizontale Stange auf Seiten des hier dargestellten Trägerkörpers 6 den Bodenkontakt verlieren, so dass sich auf dieser Seite der Wäschetrockner nur noch über die Laufrollen 4 auf dem Boden abstützt und die Rollvorrichtung ihre volle Funktion erhält.

In Figur 2 ist schematisch eine andere Ausgestaltung des Trägerkörpers 6 dargestellt. Dieser Trägerkörper 6 wird von der von unten nach oben verlaufenden Stange des Standgestells 1 durchsetzt (hier gestrichelt dargestellt) und ist im unteren Bereich an dieser Stange derart gelagert, dass er axial fest sitzt, jedoch um dieses Axiallager herum schwenkbar ist, wobei zwei V-förmig nach oben auseinander klaffende Halbzylinder die Schwenkbewegung der beiden Halbzylinder des Trägerkörpers 6 begrenzen. In beide Halbzylinder kann die Stange des Standgestells 1 eingeklemmt werden, so dass der Träger Körpers 6 an zwei grundlegenden Positionen an dieser Stange befestigt werden kann.

Der Sinn der dieser Befestigungsmöglichkeit an zwei Positionen besteht darin, dass der hier nach links tragende Ausleger 3 durch das Verschwenken des Trägerkörpers 6, an dem er befestigt ist, ebenfalls bewegt wird. Hierdurch wiederum werden die Achse D und die Laufrolle 4, die sich am Ende des Ausleger 3 befinden, um einen auf der Stangenachse liegenden Punkt gedreht, so dass die Laufrolle 4 relativ zum Standgestell 1 je nachdem, ob der linke oder der rechte Halbzylinder in die Stange des Standgestells 1 eingelegt ist, in einer unterschiedlichen Höhe relativ zum Standgestell 1 festgelegtwerden kann.

Bei dieser Ausgestaltung kann der Benutzer also manuell wählen, ob er einen dauerhaften Bodenkontakt der Laufrollen 4 wünscht oder ob er die Laufrollen 4 so einstellen möchte, dass sie nur nach dem Verkippen des Standgestells 1, wie oben in Verbindung mit Figur 1 beschrieben, mit dem Boden in Kontakt kommen. Dieser Ausführungsform ist nur eine von vielen denkbaren Möglichkeiten, alternativ kann auch eine reine Höhenverstellbarkeit der Laufrolle 4 am Trägerkörper 6 oder ein axiales Verschieben des Trägerkörpers 6 vorgesehen werden. Selbstverständlich lässt sich die Ausgestaltung des Rollmittels als Kugel auch mit den anderen Ausführungen, die oben beschrieben wurden, kombinieren.

### Bezugszeichenliste:

- 1: Standgestell
- 2: Eckverbindungselement des Standgestells
- 3: Ausleger
- 4: Laufrolle
- 5: Auflagebereich
- 6: Trägerkörper

- D: Drehachse der Laufrolle

## Patentansprüche

1. Rollvorrichtung zum Befestigen an einem Standgestell (1) eines Wäschetrockners, mit
• zumindest einem, an einem Befestigungsabschnitt des Standgestells (1) befestigbaren Rollmittel,
• einem an dem Standgestell (1) befestigbaren Trägerkörper (6), der einen Ansatzbereich in Form einer Aufnahme aufweist, in die ein Rahmenabschnitt des Standgestells formschlüssig derart einlegbar ist, dass der Trägerkörper (6) das Standgestell (1) im Ansatzbereich zumindestteilweise umgreift,
wobei an dem Trägerkörper (6) wenigstens ein Ausleger (3) vorgesehen ist, an dem das Rollmittel drehbar gelagert ist, **dadurch gekennzeichnet, dass** an dem Ausleger (3) ein Rollenträger angeordnet ist, an dem das Rollmittel drehbar gelagertist und der um eine zur Drehachse der Laufrolle (4) im Winkel angeordnete Drehachse (D) drehbar ist, wobei die Drehachse (D) des Rollenträgers im Vergleich zur Vertikalen um einen Winkelverkipptist.

2. Rollvorrichtung nach Anspruch 1, **dadurch gekennzeichnet, dass** das Rollmittel als eingefasste Rollkugel ausgebildet ist, die über eine Fassung am dem Rollenträger gehalten ist und mit einem unteren Kugelschnittaufdem Untergrund aufsteht.

3. Rollvorrichtung nach Anspruch 1, **dadurch gekennzeichnet, dass** das Rollmittel als Laufrolle (4) ausgebildet ist, die an dem Rollenträger um eine Rollachse drehbar gelagert ist.

4. Rollvorrichtung nach einem der vorhergehenden Ansprüche, **dadurch gekennzeichnet, dass** der Trägerkörper (6) eine horizontal verlaufende Einlegerinne mit im Wesentlichen U-förmigen Querschnitt aufweist, in die eine horizontale Stange des Standgestells (1) ein leg bar ist.

5. Rollvorrichtung nach Anspruch 1, 2 oder 3, **dadurch gekennzeichnet, dass** der Trägerkörper (6) eine vertikal oder im Winkel zur Horizontalen verlaufende Einlegerinne mitim Wesentlichen U-förmigen Querschnitt aufweist, in die eine von unten nach oben verlaufende Stange des Standgestells (1) einlegbarist.

6. Rollvorrichtung nach einem der vorhergehenden Ansprüche, **dadurch gekennzeichnet, dass** der Trägerkörper (6) über eine Rastverbindung mit dem Standgestell (1) verbindbar ist.

7. Rollvorrichtung für Standtrockner mit einem Standgestell (1), das zwei gegenüberliegende Aufstellbügel aufweist, über die das Standgestell (1) auf einen Untergrund aufstellbar ist, nach einem der vorhergehenden Ansprüche, **dadurch gekennzeichnet, dass** der Trägerkörper (6) derartausgebildet ist, dass bei Befestigung des Trägerkörpers (6) an einem der beiden Aufstellbügel die Laufrolle (4) im Abstand zu einem Gestänge des Aufstellbügels und auf der dem gegenüberliegenden Aufstellbügel abgewandten Seite angeordnet ist, wobei der Aufstellbügel und/oder der Trägerkörper eine untere Auflagefläche aufweisen, auf der das Standgestell (1) in einer Trockenposition aufsteht und die untere Lauffläche der Laufrolle (4) höher als die untere Auflagefläche positioniert ist, so dass die Laufrolle (4) in Trockenposition frei hängend angeordnet ist und erst nach Verkippen des Standgestells (1) in eine Verfahrposition mit dem Untergrund in Kontakt gerät.

8. Rollvorrichtung nach einem der vorhergehenden Ansprüche, **dadurch gekennzeichnet, dass** das Rollmittel höhenverstell- und in zumindest zwei Höhen festlegbar am Trägerkörper (6) gehalten ist.

9. Rollvorrichtung nach einem der vorhergehenden Ansprüche, **dadurch gekennzeichnet, dass** der Trägerkörper (6) zwei Aufnahmen und im unteren Bereich einen unterhalb der Ebene des Standgestells (1) angeordneten Auflagebereich (5) aufweist.

10. Wäschetrockner zum hängenden Trocknen von Wäschestücken mit einem Standgestell (1), das zumindest einen Aufstellbügel zum Aufstellen des Standgestells (1) auf einem Untergrund aufweist, **dadurch gekennzeichnet, dass** an dem unteren Ende des Aufstellbügels wenigstens eine Rollvorrichtung nach einem der vorhergehenden Ansprüche angeordnet ist.

11. Wäschetrockner nach dem vorhergehenden Anspruch, **dadurch gekennzeichnet, dass** der Trägerkörper (6) um eine horizontale Achse dreh- oder schwenkbar an dem Standgestell (1) gehalten ist, wobei die Beweglichkeit des Trägerkörpers (6) um diese Achse durch zwei Anschläge begrenztist und an den beiden Anschlagspositionen der Trägerkörper (6), insbesondere über Rastmittel, festlegbar ist und wobei in einer ersten Anschlagsposition die Lauffläche des Rollmittels unterhalb des von dem untersten Teils des Trägerkörpers (6) gebildeten Auflagebereich (5) und in einer zweiten Anschlagsposition der Auflagebereich (5) unterhalb der Lauffläche angeordnetist.

## Claims

1. Rolling device for fastening to a stand frame (1) of a clothes dryer, comprising
- at least one rolling unit, fastenable to a mounting portion of the stand frame (1),
- a support structure (6) fastenable at the stand frame (1), which has an attachment area in the form of a socket, into which a frame portion of the stand frame can be tightly inserted such that the support structure (6) at least partially embraces the stand frame (1) in the attachment area,
wherein at least one arm (3) is provided on the support structure (6), on which the rolling unit is rotatably supported, **characterized in that**
a roller carrier, on which the rolling unit is rotatably supported, is arranged on the arm (3) and which can rotate around an axis of rotation (D) arranged at an angle to the axis of rotation of the roller (4), wherein the axis of rotation (D) of the roller carrier is tilted around an angle in relation to the vertical.

2. Rolling device according to claim 1, **characterized in that** the rolling unit is designed as an enclosed roller ball, which is held on the roller carrier by means of a socket and is lifted with a lower ball section on the substrate.

3. Rolling device according to claim 1, **characterized in that** the rolling unit is designed as a roller (4) which is rotatably supported on the roller carrier around a rolling axis.

4. Rolling device according to any one of the above claims, **characterized in that** the support structure (6) has a horizontal running groove with a substantially U-shaped cross section, into which a linear bar of the stand frame (1) can be inserted.

5. Rolling device according to claim 1, 2 or 3, **characterized in that** the support structure (6) has a groove running vertically or at an angle to the horizontal with a substantially U-shaped cross section, into which a bar, running from top to bottom, of the stand frame (1) can be inserted.

6. Rolling device according to any one of the above claims, **characterized in that** the support structure (6) can be joined to the stand frame (1) by a detent connection.

7. Rolling device for clothes dryer with a stand frame (1), which has two opposite-lying stands, via which the stand frame (1) can be lifted on a substrate, according to any one of the above claims, **characterized in that** the support structure (6) is designed in such a manner that when the support structure (6) is fastened on one of the two stands the roller (4) is arranged remotely to a rod assembly of the stand and on the side averted from the opposite-lying stand, wherein the stand and/or the support structure have a lower bearing surface, on which the stand frame (1) is erected in a drying position and the lower running surface of the roller (4) is positioned higher than the lower bearing surface, so that the roller (4) is arranged in the drying position so that it is freely suspended and only after the stand frame (1) has tilted into a horizontal position makes contact with the substrate.

8. Rolling device according to any one of the above claims, **characterized in that** the rolling unit is held on the support structure (6) so that its height can be adjusted and fixed on at least two levels.

9. Rolling device according to any one of the above claims, **characterized in that** the support structure (6) has two sockets and within the lower area a contact area (5) arranged below the level of the stand frame (1).

10. Clothes dryer for hang-drying laundry comprising a stand frame (1), which has at least one stand for lifting the stand frame (1) on a substrate, **characterized in that** at the lower end of the stand at least one rolling device according to any one of the above claims is arranged.

11. Clothes dryer according to the above claim, **characterized in that** the support structure (6) is rotatably or pivotally held on the stand frame (1) around a horizontal axis, wherein the mobility of the support structure (6) around this axis is limited by two stops and can be fixed at the two stop positions of the support structures (6), specifically by detent means, and wherein, in a first stop position, the running surface of the rolling unit is arranged below the contact area (5) formed by the lowest part of the support structure (6) and, in a second stop position, the contact area (5) is arranged below the running surface.

## Revendications

1. Dispositif à roulettes destiné à être mis en place sur un châssis (1) d'un sèche-linge comportant
• au moins un moyen à roulettes pouvant être fixé à une section de fixation du châssis (1),
• un corps de support (6) pouvant être fixé au châssis (1) qui comporte une zone de fixation sous forme d'une réception dans laquelle une partie de cadre du châssis peut être insérée mécaniquement de sorte que le corps de support (6) entoure au moins en partie le châssis (1) dans la partie de fixation,
au moins un bras (3) étant prévu sur le corps de support (6) sur lequel le moyen à roulettes est monté en rotation, **caractérisé en ce qu'**
il est disposé sur le bras (3) un porte-roulettes sur lequel le moyen à roulettes est monté en rotation et qui peut être tourné autour d'un axe de rotation (D) disposé selon un certain angle par rapport à l'axe de rotation de la roulette (4), l'axe de rotation (D) du porte-roulettes étant basculé d'un certain angle par rapport à la verticale.

2. Dispositif à roulettes selon la revendication 1, **caractérisé en ce que** le moyen à roulettes est formé en tant que boule roulante encadrée et s'appuie sur le sol avec une section de boule inférieure.

3. Dispositif à roulettes selon la revendication 1, **caractérisé en ce que** le moyen à roulettes est formé en tant que roulette (4) qui est montée sur le porte-roulettes de manière à pouvoir être tournée autour d'un axe de rotation.

4. Dispositif à roulettes selon l'une quelconque des revendications précédentes, **caractérisé en ce que** le corps de support (6) comporte une goulotte d'insertion disposée horizontalement présentant sensiblement une section en U dans laquelle peut être insérée une barre horizontale du châssis (1).

5. Dispositif à roulettes selon la revendication 1, 2 ou 3, **caractérisé en ce que** le corps de support (6) comporte une goulotte d'insertion disposée verticalement ou selon un certain angle par rapport à l'horizontale présentant sensiblement une section en U dans laquelle peut être insérée une barre du châssis (1) s'étendant vers le haut.

6. Dispositif à roulettes selon l'une quelconque des revendications précédentes, **caractérisé en ce que** le corps de support (6) peut être relié au châssis (1) par une liaison d'encliquetage.

7. Dispositif à roulettes pour sèche-linge à pied avec un châssis (1) comportant deux étriers de support opposés par lesquels le châssis (1) peut être installé sur le sol, selon l'une quelconque des revendications précédentes, **caractérisé en ce que** le corps de support (6) est formé de sorte qu'en cas de fixation du corps de support (6) sur un des deux étriers de support, la roulette (4) est disposée à une distance des tringles de l'étrier d'installation et sur le côté opposé à l'étrier d'installation en face, l'étrier de support et/ou le corps de support comportant une surface d'appui inférieure sur laquelle s'appuie le châssis (1) dans une position de séchage et la surface de roulement inférieure de la roulette (4) étant positionnée à une position plus haute que la surface d'appui inférieure, si bien que la roulette (4) est disposée en suspension libre en position de séchage et n'entre en contact avec le sol qu'après le basculement du châssis (1) dans une position de déplacement.

8. Dispositif à roulettes selon l'une quelconque des revendications précédentes, **caractérisé en ce que** le moyen à roulettes est monté sur le corps de support (6) de sorte à pouvoir être réglé en hauteur et à au moins deux hauteurs possibles.

9. Dispositif à roulettes selon l'une quelconque des revendications précédentes, **caractérisé en ce que** le corps de support (6) comporte deux réceptions et dans la partie inférieure une surface d'appui (5) disposée au-dessous du plan du châssis (1).

10. Sèche-linge pour le séchage en suspension de pièces de linge à l'aide d'un châssis (1) comportant au moins un étrier de support pour installer le châssis (1) sur le sol, **caractérisé en ce qu'**au moins un dispositif à roulements est disposé à l'extrémité inférieure de l'étrier de support selon l'une quelconque des revendications précédentes.

11. Sèche-linge selon la revendication précédente, **caractérisé en ce que** le corps de support (6) est monté sur le châssis (1) de sorte à pouvoir être tourné ou pivoté autour d'un axe horizontal, la mobilité du corps de support (6) autour de cet axe étant limitée par deux butées et pouvant être déterminée sur les deux positions de butée des corps de support (6), notamment par moyens d'encliquetage, la surface de roulement du moyen à roulements étant disposé dans une première position de butée au-dessous de la surface d'appui (5) formée par la partie inférieure du corps de support (6) et la surface d'appui (5) étant disposée dans une deuxième position de butée au-dessous de la surface de roulement.
